# EUROPEAN PATENT APPLICATION

(11) **EP 4 763 321 A1**
(43) Date of publication of application: **24.06.2026**
(21) Application number: 25864517.5
(22) Date of filing: 16.09.2025
(51) Int. Cl.: B01F 23/53, B01F 23/50, B01F 27/90, B01F 27/116, B01F 27/192, H01M 4/04, H01M 10/00

(54) **SLURRY MIXING DEVICE AND SLURRY MIXING METHOD**

(30) Priority: 07.10.2024 KR 20240135891; 08.09.2025 KR 20250127132
(71) Applicant: LG Energy Solution, Ltd., Seoul 07335 (KR)
(72) Inventor: PARK, Hoon Seo, Daejeon 34122 (KR)
(74) Representative: Plasseraud IP
(86) International application number: PCT/KR2025/014354
(87) International publication number: WO 2026/079702

(57) **Abstract**

A slurry mixing device includes: a lower housing including an accommodation portion that accommodates slurry and having an open upper side; an upper cover located above the lower housing and having one or more inlets; an agitator having one side located inside the lower housing to mix the slurry; and one or more first mixing members located inside the lower housing.

## Description

### [Technical Field]

This application is based on and claims priority from Korean Patent Application Nos. 10-2024-0135891 and 10-2025-0127132 filed on October 7, 2024 and September 8, 2025, with the Korean Intellectual Property Office, respectively, the disclosures of which are incorporated herein in their entireties by reference.

The present disclosure relates to a slurry mixing device and a slurry mixing method.

### [Background Art]

Recently, due to air pollution caused by the use of fossil fuels and the depletion of energy resources leading to the development of alternative energy, demand has increased for secondary batteries capable of storing electric energy that has been produced.

Secondary batteries, which are indispensably used as energy sources for various electronic devices in modern society, have increased in required capacity due to the increased use and complexity of mobile devices and the development of electric vehicles. In order to meet user demand, multiple battery cells are arranged in small devices, whereas in vehicles, a battery module in which multiple battery cells are electrically connected, or a battery pack having multiple battery modules, is used.

A battery cell in the related art includes an electrode assembly and a pouch case accommodating the electrode assembly, and the electrode assembly includes an electrode in which an electrode active material is coated on an electrode current collector and a separator disposed between electrodes to prevent a short circuit.

As described above, the electrode is formed by coating the electrode active material on the electrode current collector, and the performance of the electrode varies depending on the quality of the electrode active material.

### [Disclosure]

### [Technical Problem]

The present disclosure provides a slurry mixing device capable of more precisely removing the metallic foreign substances contained in the slurry for manufacturing an electrode of a secondary battery, thereby improving the quality of the slurry.

Further, the present disclosure provides a slurry mixing device capable of removing or alleviating a slurry agglomeration that may occur in the slurry, thereby improving the quality of the slurry.

### [Technical Solution]

The slurry mixing device according to the present disclosure includes a lower housing including an accommodation portion that accommodates slurry and having an open upper side, an upper cover located above the lower housing and having one or more inlets, an agitator having one side located inside the lower housing to mix the slurry, and a plurality of first mixing members located inside the lower housing.

In the slurry mixing device according to the present disclosure, the plurality of first mixing members include a first magnetic body in a spherical shape and a first cover portion surrounding an outer surface of the first magnetic body.

In the slurry mixing device according to the present disclosure, the first cover portion is made of a ceramic material.

The slurry mixing device according to the present disclosure includes a plurality of second mixing members located inside the lower housing.

In the slurry mixing device according to the present disclosure, the second mixing member is spherical, has a hollow interior, and has one or more first cut portions formed on an outer surface thereof and each having a predetermined area.

In the slurry mixing device according to the present disclosure, the second mixing member is made of a metallic material.

The slurry mixing device according to the present disclosure includes a plurality of third mixing members located inside the lower housing.

In the slurry mixing device according to the present disclosure, the third mixing member includes a second magnetic body in a spherical shape, a second cover portion surrounding the second magnetic body, and a spherical third cover portion having an accommodation portion formed therein to receive the second magnetic body and the second cover portion and having one or more second cut portions formed on an outer surface thereof and each having a predetermined area.

In the slurry mixing device according to the present disclosure, a diameter of the third cover portion exceeds a diameter of the second cover portion.

In the slurry mixing device according to the present disclosure, the second cover portion is made of a ceramic material.

In the slurry mixing device according to the present disclosure, the third cover portion is made of a metallic material.

In the slurry mixing device according to the present disclosure, the agitator includes a rotation shaft having one side located inside the lower housing and the other side protruding outside the upper housing, and one or more rod-shaped extension portions extending a predetermined length from one side of the rotation shaft.

A slurry mixing method according to another embodiment of the present disclosure includes: providing a slurry mixing device including a lower housing including an accommodation portion that accommodates slurry and having an open upper side, an upper cover located above the lower housing and having one or more inlets, an agitator having one side located inside the lower housing to mix the slurry, and one or more first mixing members located inside the lower housing and configured to move freely; supplying the slurry through the one or more inlets; and agitating the slurry using the agitator and the one or more first mixing members.

In the slurry mixing method according to another embodiment of the present disclosure, the first mixing member includes a first magnetic body in a spherical shape and a second cover portion surrounding an outer surface of the first magnetic body.

In the slurry mixing method according to another embodiment of the present disclosure, the slurry mixing device further includes one or more second mixing members located inside the lower housing.

In the slurry mixing method according to another embodiment of the present disclosure, the second mixing member is spherical, has a hollow interior, and has one or more first cut portions formed on an outer surface thereof and each having a predetermined area.

### [Advantageous Effects]

According to the slurry mixing device capable of improving the quality of slurry, according to the present disclosure, the first mixing member and the third mixing member, which include a magnetic body, may effectively remove metallic foreign substances contained in the slurry while moving inside the lower housing, thereby providing an advantage of improving the quality of the slurry.

According to the slurry mixing device capable of improving the quality of slurry, according to the present disclosure, the mixing members may move throughout the entire area inside the lower housing and may remove or alleviate the slurry agglomeration through collision with the slurry agglomeration, thereby providing an advantage of improving the quality of the slurry.

### [Description of Drawings]

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a perspective view illustrating a mixer device in the related art.
FIG. 2 is a perspective view illustrating a slurry mixing device according to a first embodiment of the present disclosure.
FIG. 3 is a perspective view illustrating a first mixing member according to the first embodiment of the present disclosure.
FIG. 4 is a perspective view illustrating a slurry mixing device according to a second embodiment of the present disclosure.
FIG. 5 is a perspective view illustrating a second mixing member according to the second embodiment of the present disclosure.
FIG. 6 is a perspective view illustrating a slurry mixing device according to a third embodiment of the present disclosure.
FIG. 7 is a perspective view illustrating a third mixing member according to the third embodiment of the present disclosure.
FIG. 8 is a flowchart illustrating a slurry mixing method according to one embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Best Mode]

As used herein, it should be understood that the terms "comprise," "include," or "have," etc., are intended to specify the presence of a feature, number, step, component, part, or combination thereof, but do not exclude in advance the possibility of the presence or addition of one or more other features, numbers, steps, operations, components, parts, or combinations thereof.

Further, throughout the drawings, the same reference numerals are used for parts having similar functions and operations. In the present specification, when a part is described as being connected to another part, this includes not only a case where the part is directly connected, but also a case where the part is indirectly connected with another element interposed therebetween. In addition, unless otherwise stated, a description that a component includes another component does not exclude the presence of an additional component, but may further include other components.

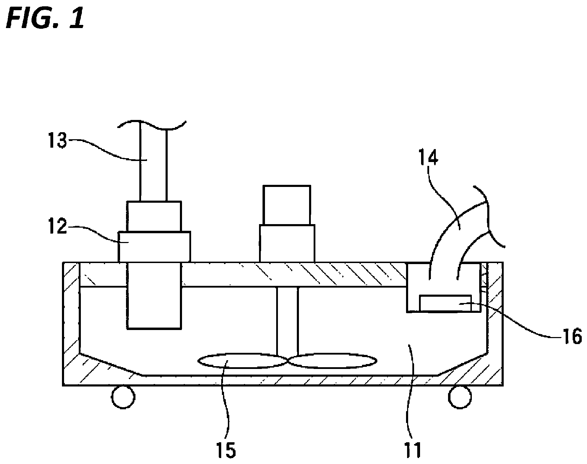

Japanese Patent Laid-Open Publication No. 2011-045950 discloses a slurry supply device or a mixer device for processing a glass substrate. FIG. 1 is a perspective view illustrating a mixer device according to the related art disclosed in Japanese Laid-Open Patent Publication No. 2011-045950. As illustrated in FIG. 1, the mixer device according to the related art includes an accommodation portion 11 in which slurry is accommodated, a pump 12 that sucks the slurry, a first pipe 13 connected to the pump 12 and through which the slurry moves, a second pipe 14 that supplies the slurry, an agitator 15 that mixes the slurry, and a permanent magnet 16 provided at an outlet of the second pipe 14.

The metallic foreign substances contained in the slurry supplied through the second pipe 14 according to the related art may be removed by the permanent magnet 16, but there is a problem in that some metallic foreign substances may not be removed due to the moving speed of the slurry and may move into the accommodation portion 11.

In addition, in the mixer device according to the related art, when the slurry is mixed by the agitator 15, a slurry agglomeration may occur in areas where the agitator 15 does not reach, resulting in deterioration of quality.

The present disclosure provides a mixing device capable of more precisely removing the metallic foreign substances contained in the slurry for manufacturing an electrode of a secondary battery, thereby improving the quality of the slurry, in consideration of such problems.

Hereinafter, a slurry mixing device capable of improving the quality of slurry, according to the present disclosure, will be described with reference to the accompanying drawings.

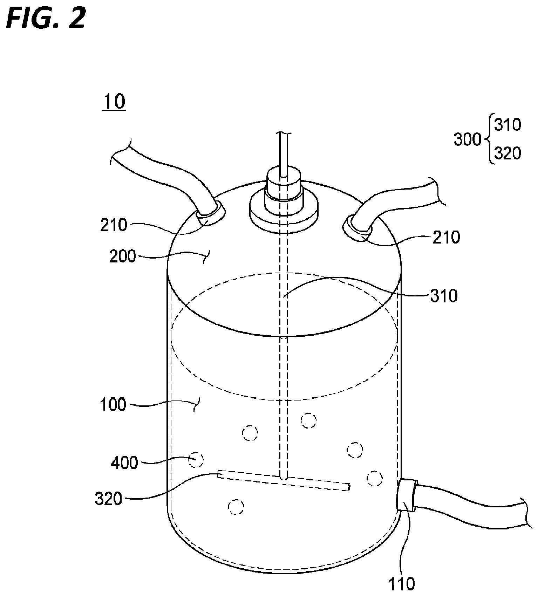

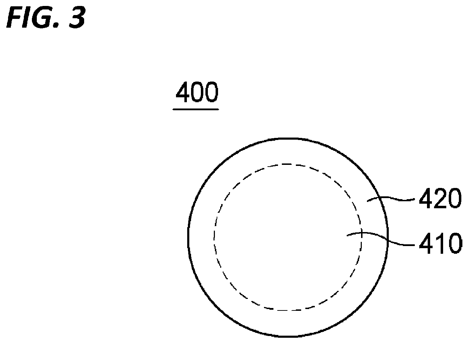

FIG. 2 is a perspective view illustrating a slurry mixing device 10 according to a first embodiment of the present disclosure, and FIG. 3 is a perspective view illustrating a first mixing member 400 according to the first embodiment of the present disclosure.

Referring to FIGS. 2 and 3, the mixing device 10 according to the first embodiment of the present disclosure includes a lower housing 100, an upper housing 200, an agitator 300, and a first mixing member 400.

First, the lower housing 100 has an accommodation portion formed therein with a predetermined region being hollow, has an open upper side, and serves to accommodate the slurry to be mixed.

A discharge port 110 is provided at a lower side of the lower housing 100, and the discharge port 110 is configured to discharge finished slurry to the outside.

The discharge port 110 may further include a filter (not illustrated) that allows the slurry to pass but prevents the first mixing member 400 (to be described below) from being discharged through the discharge port 110.

The discharge port 110 may have a structure formed smaller than the size of the first mixing member 400 to prevent or suppress the first mixing member 400 from being discharged.

The slurry may be a positive electrode active material applied to a positive electrode current collector or a negative electrode active material applied to a negative electrode current collector.

The positive electrode active material may include layered compounds such as lithium cobalt oxide (LiCoO₂) and lithium nickel oxide (LiNiO₂), or compounds substituted with other transition metals; lithium manganese oxides such as Li₁₊ₓMn₂₋ₓO₄ (where x is 0 to 0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni-site type lithium nickel oxides represented by the formula LiNi₁₋ₓMₓO₂ (where M is Co, Mn, Al, Cu, Fe, Mg, B, or Ga, and x is 0.01 to 0.3); lithium manganese composite oxides represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which a portion of Li in the formula is substituted with an alkaline earth metal ion; disulfide compounds; Fe₂(MoO₄)₃; and LiNiₓMn₂₋ₓO₄ (0.01≤x≤0.6).

The positive electrode active material may be mixed with a conductive material and a binder, anda filler may be further added as necessary.

The conductive material is typically added in an amount of about 1 wt% to 50 wt% based on the total weight of the mixture including the positive electrode active material. The conductive material is not particularly limited as long as it has conductivity without causing chemical changes in the battery. Examples of the conductive material include graphite such as natural graphite and artificial graphite; carbon black such as acetylene black, Ketjen black, channel black, furnace black, lamp black, and thermal black; conductive fibers such as carbon fibers or metal fibers; fluorinated carbon; metal powders such as aluminum or nickel powder; conductive whiskers such as zinc oxide or potassium titanate; conductive metal oxides such as titanium oxide; and conductive materials such as polyphenylene derivatives.

The binder is a component that assists in binding the positive electrode active material and the conductive material, and in binding to the current collector, and is typically added in an amount of about 1 wt% to 50 wt% based on the total weight of the mixture including the positive electrode active material. Examples of the binder include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber, and various copolymers.

Examples of the negative electrode active material include carbons such as non-graphitizable carbon and graphitic carbon; metal composite oxides such as LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, Group 1, 2, or 3 elements of the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₃, GeO, GeO₂, Bi₂O₃, Bi₂O₄, and Bi₂O₅; conductive polymers such as polyacetylene; Li-Co-Ni-based materials; and silicon-based materials consisting of Si, SiO, SiO₂ either alone or mixtures thereof, but are not limited thereto.

The negative electrode active material may be additionally mixed with a conductive material and a binder and coated on a negative electrode current collector.

The conductive material is a component for further improving the conductivity of the negative electrode active material, and examples thereof include carbon blacks such as acetylene black, Ketjen black, channel black, furnace black, lamp black, and thermal black; conductive fibers such as carbon fibers or metal fibers; metal powders such as fluorocarbon, aluminum, or nickel powder; conductive whiskers such as zinc oxide or potassium titanate; conductive metal oxides such as titanium oxide; and conductive materials such as polyphenylene derivatives, which may be used in a certain proportion.

The binder is a component that assists in binding the negative electrode active material and the conductive material, and in binding to the current collector, and may include at least one selected from styrene-butadiene rubber (SBR), acrylonitrile-butadiene rubber, acrylic rubber, butyl rubber, fluoro rubber, polyvinyl alcohol, carboxymethylcellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

The upper housing 200 is located at an open portion of the lower housing 100 to seal the accommodation portion of the lower housing 100, and may prevent or suppress the slurry from scattering upward from the lower housing 100.

A plurality of inlets 210 may be formed at an upper side of the upper housing 200, and through the inlets 210, an electrode active material, a conductive material, a binder, and the like for forming the slurry are introduced into the lower housing 100.

An agitator 300 according to an embodiment is configured to agitate the slurry accommodated in the lower housing 100 and includes a rotation shaft 310 and an extension portion 320.

The rotation shaft 310 is positioned such that one side thereof is located inside the lower housing 100 and the other side thereof protrudes outward by passing through the upper housing 200.

According to an embodiment, one or more extension portions 320 are located at one side of the rotation shaft 310 and are formed in a rod shape extending a predetermined length from one side of the rotation shaft 310.

The extension portion 320 agitates the slurry inside the lower housing 100 according to rotation of the rotation shaft 310, and the extending direction of the extension portion 320 is not particularly limited as long as the direction does not overlap with the rotation shaft 310. The shape of the extension portion 320 may be modified into various forms depending on the type of slurry to be processed.

One or more first mixing members 400 are provided in the lower housing 100 to remove the metallic foreign substances or alleviate the slurry agglomeration, and as illustrated in FIG. 3, the first mixing member 400 includes a first magnetic body 410 and a first cover portion 420.

In an embodiment, the first magnetic body 410 is formed of a spherical magnetic material and removes metallic foreign substances contained in the slurry while moving inside the slurry. The shape of the first magnetic body 410 may be configured in various forms depending on the type of slurry to be processed.

The first magnetic body 410 moves inside the lower housing 100 while removing metallic foreign substances from the slurry, thereby removing the metallic foreign substances that may be present at an edge portion inside the lower housing 100.

The first cover portion 420 surrounds an outer surface of the first magnetic body 410 and may be made of a ceramic material, according to an embodiment.

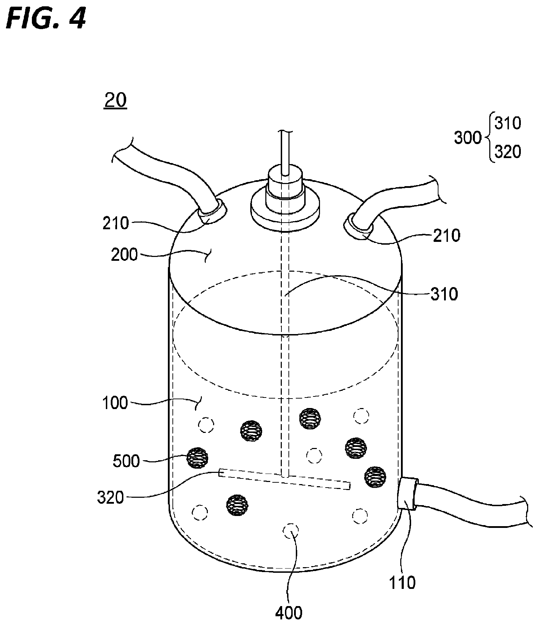

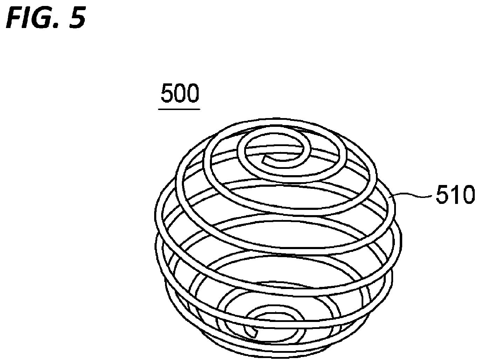

FIG. 4 is a perspective view illustrating a slurry mixing device 20 according to a second embodiment of the present disclosure, and FIG. 5 is a perspective view illustrating a second mixing member 500 according to the second embodiment of the present disclosure.

Referring to FIGS. 4 and 5, the slurry mixing device 20 according to the second embodiment of the present disclosure is substantially the same as the slurry mixing device 10 according to the first embodiment illustrated in FIGS. 2 and 3, except that the slurry mixing device 20 further includes the second mixing member 500, and therefore, a description of the same components will be omitted.

In the slurry mixing device 20 according to the second embodiment, one or more second mixing members 500 are provided in a spherical shape having a hollow interior and having one or more first cut portions 510, each having a predetermined area, formed on an outer surface thereof, as illustrated in FIG. 5.

When the second mixing member 500 moves around inside the lower housing 100, the slurry flows in and out through the first cut portion 510, thereby removing and improving slurry agglomeration and providing an advantage of improving the quality of the slurry.

The second mixing member 500 is made of a material having predetermined physical properties and, according to an embodiment, is made of a metallic material.

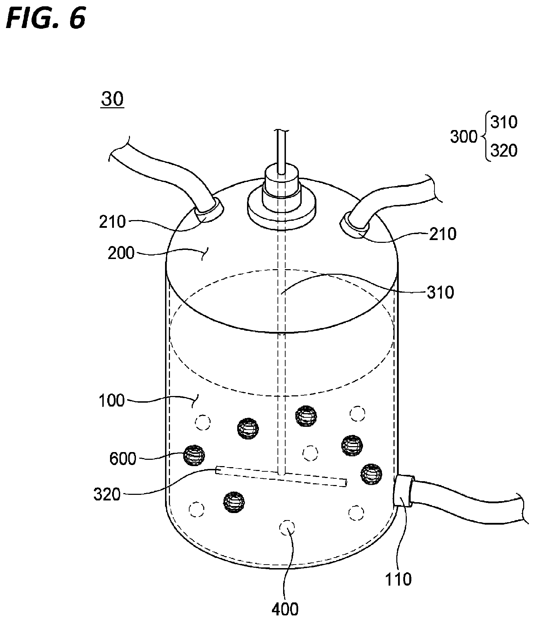

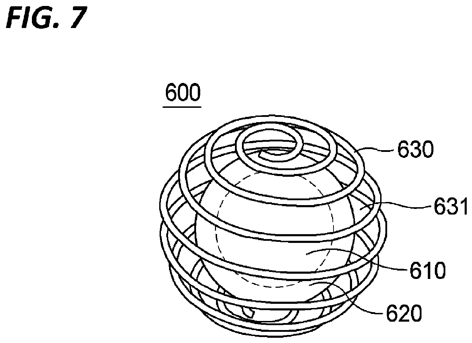

FIG. 6 is a perspective view illustrating a slurry mixing device 30 according to a third embodiment of the present disclosure, and FIG. 7 is a perspective view illustrating a third mixing member 600 according to the third embodiment of the present disclosure.

Referring to FIGS. 6 and 7, the slurry mixing device 30 according to the third embodiment of the present disclosure is substantially the same as the slurry mixing device 10 according to the first embodiment illustrated in FIGS. 2 and 3, except that the slurry mixing device 30 further includes the third mixing member 600, and therefore, a description of the same components will be omitted.

In the slurry mixing device 30 according to the third embodiment, the third mixing member 600 is configured to remove the metallic foreign substances contained in the slurry or alleviate the slurry agglomeration, and includes a second magnetic body 610, a second cover portion 620, and a third cover portion 630.

According to an embodiment, the second magnetic body 610 is made of a magnetic material, and is formed in a spherical shape to remove the metallic foreign substances in the slurry. The material and shape of the second magnetic body 610 are not limited thereto and may be configured in various forms depending on the type of slurry to be processed.

The second cover portion 620 surrounds an outer surface of the second magnetic body 610 and, according to an embodiment, may be made of a ceramic material.

The third cover portion 630 according to an embodiment is spherical, has an accommodation portion formed therein to receive the second magnetic body 610 and the second cover portion 620, and has one or more second cut portions 631, each having a predetermined area, formed on an outer surface thereof.

The diameter of the third cover portion 630 is formed to exceed the diameter of the second cover portion 620 at a corresponding portion, so that the slurry flows in and out through the second cut portion 631 of the third cover portion 630.

As described above, the slurry may flow in and out through the second cut portion 631 of the third cover portion 630, thereby removing and improving the slurry agglomeration.

The third cover portion 630 is made of a material having predetermined physical properties and, according to an embodiment, may be formed of a metallic material.

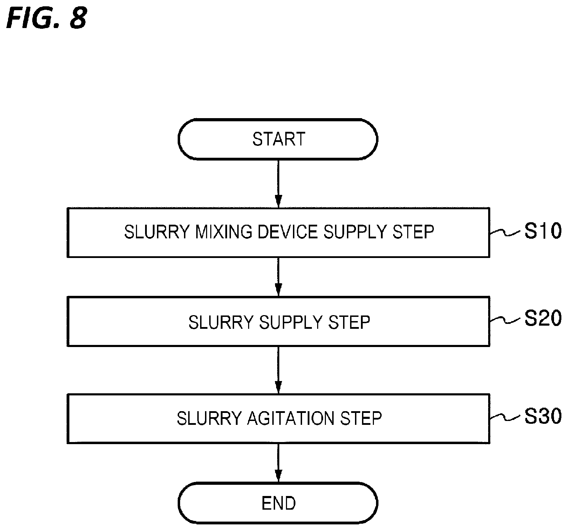

FIG. 8 is a flowchart illustrating a slurry mixing method according to one embodiment of the present disclosure.

Referring to FIG. 8, the slurry mixing method according to an embodiment of the present disclosure includes supplying a slurry mixing device including a lower housing having an accommodation portion that accommodates the slurry and having an open upper side, an upper cover located above the lower housing and having one or more inlets, an agitator having one side located inside the lower housing to mix the slurry, and one or more first mixing members located inside the lower housing and configured to move freely (S10), supplying the slurry through the one or more inlets (S20), and agitating the slurry using the agitator and the one or more first mixing members (S30).

While specific portions of the content of the present disclosure have been described in detail above, such specific descriptions are merely exemplary embodiments to those of ordinary skill in the art, and the scope of the present disclosure is not limited thereby, and it will be apparent to those of ordinary skill in the art that various changes and modifications can be made within the scope of the category and technical spirit of the present disclosure, and it is natural that such changes and modifications fall within the appended claims.

### (Description of Reference Symbols)

10, 20, 30: Slurry mixing device
100: Lower housing
110: Discharge port
200: Upper housing
210: Inlet
300: Agitator
310: Rotation shaft
320: Extension portion
400: First mixing member
410: First magnetic body
420: First cover portion
500: Second mixing member
510: First cut portion
600: Third mixing member
610: Second magnetic body
620: Second cover portion
630: Third cover portion
631: Second cut portion

## Claims

1. A slurry mixing device comprising:
a lower housing including an accommodation portion configured to accommodate slurry and having an open upper side;
an upper cover located above the lower housing and having one or more inlets;
an agitator having one side located inside the lower housing to mix the slurry; and
one or more first mixing elements located inside the lower housing.

2. The slurry mixing device according to claim 1, wherein the first mixing element includes a first magnetic body in a spherical shape and a first cover portion surrounding an outer surface of the first magnetic body.

3. The slurry mixing device according to claim 2, wherein the first cover portion is made of a ceramic material.

4. The slurry mixing device according to claim 2, further comprising:
one or more second mixing elements located inside the lower housing.

5. The slurry mixing device according to claim 4, wherein the second mixing element is spherical, has a hollow interior, and has one or more first cut portions formed on an outer surface thereof and each having a predetermined area.

6. The slurry mixing device according to claim 4, wherein the second mixing element is made of a metallic material.

7. The slurry mixing device according to claim 2, further comprising:
one or more third mixing elements located inside the lower housing.

8. The slurry mixing device according to claim 7, wherein the third mixing element includes:
a second magnetic body in a spherical shape;
a second cover portion surrounding the second magnetic body; and
a third cover portion in a spherical shape including an accommodation portion formed therein to receive the second magnetic body and the second cover portion, and having one or more second cut portions formed on an outer surface thereof and each having a predetermined area.

9. The slurry mixing device according to claim 8, wherein a diameter of the third cover portion exceeds a diameter of the second cover portion at a corresponding portion.

10. The slurry mixing device according to claim 8, wherein the second cover portion is made of a ceramic material.

11. The slurry mixing device according to claim 8, wherein the third cover portion is made of a metallic material.

12. The slurry mixing device according to claim 2, wherein the agitator includes: a rotation shaft having one side located inside the lower housing and a remaining side protruding outside the upper housing; and one or more rod-shaped extension portions extending a predetermined length from one side of the rotation shaft.

13. A slurry mixing method comprising:
providing a slurry mixing device including: a lower housing including an accommodation portion configured to accommodate slurry and having an open upper side; an upper cover located above the lower housing and having one or more inlets; an agitator having one side located inside the lower housing to mix the slurry; and one or more first mixing elements located inside the lower housing and configured to move freely;
supplying the slurry through the one or more inlet; and
agitating the slurry using the agitator and the one or more first mixing elements.

14. The slurry mixing method according to claim 13, wherein the first mixing element includes a first magnetic body in a spherical shape and a first cover portion surrounding an outer surface of the first magnetic body.

15. The slurry mixing method according to claim 13, wherein the slurry mixing device further includes one or more second mixing elements located inside the lower housing.

16. The slurry mixing method according to claim 15, wherein the second mixing element is spherical, has a hollow interior, and has one or more first cut portions formed on an outer surface thereof and each having a predetermined area.
